(19) **Europäisches Patentamt / European Patent Office / Office européen des brevets**

(11) **EP 3 896 904 A1**

(12) **EUROPEAN PATENT APPLICATION**
published in accordance with Art. 153(4) EPC

(43) Date of publication:
**20.10.2021 Bulletin 2021/42**

(21) Application number: **19897731.6**

(22) Date of filing: **16.01.2019**

(51) Int Cl.:
*H04L 12/24* (2006.01)　　　*H04L 12/12* (2006.01)

(86) International application number:
**PCT/CN2019/071879**

(87) International publication number:
**WO 2020/124721 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2018　CN 201811555329**

(71) Applicant: **Wangsu Science & Technology Co., Ltd.**
**Shanghai 200030 (CN)**

(72) Inventor: **SUN, Yunyun**
**Xuhui District Shanghai 200030 (CN)**

(74) Representative: **De Arpe Tejero, Manuel**
**Arpe Patentes y Marcas**
**Alcalá, 26, 5ª Planta**
**28014 Madrid (ES)**

(54) **DOWNTIME NOTIFICATION METHOD AND DEVICE**

(57) The present disclosure provides a method for notifying downtime and belongs to the field of computer technology. The method includes: when monitoring a target server is down, determining a target computer room where the target server is located; according to statistical parameters of all previous notifications of the target computer room, adjusting a priority among a plurality of notification methods corresponding to the target computer room, where the statistical parameters at least include notification time and a restart success rate; and according to a highest priority notification method, sending a restart message for restarting the target server to the target computer room. By adopting the present disclosure, system resources can be saved, and the service quality of the automatic notification system can be effectively improved.

When monitoring a target server is down, determining a target computer room where the target server is located — 101

According to statistical parameters of all previous notifications of the target computer room, adjusting a priority among a plurality of notification methods corresponding to the target computer room — 102

According to a highest priority notification method, sending a restart message for restarting the target server to the target computer room — 103

**Figure 1**

**Description**

FIELD OF THE DISCLOSURE

The present disclosure generally relates to the field of computer technology and, more particularly, relates to a method and device for notifying downtime.

BACKGROUND

With the rapid development of Internet business, more and more manufacturers, e.g., content delivery network (CDN) service provider, cloud computing vendor, etc., choose to deploy computer rooms throughout the country. After a server in the computer room is down, these manufacturers often adopt an automatic notification system to notify a technician of the computer room to restart the server that is down.

A management server of the automatic notification system can monitor operating status of the server in each computer room. When monitoring a server in a certain computer room is down, according to location information of the server that is down, e.g., an IP address of the server that is down, and a computer room number of the computer room where the server that is down is located, etc., the management server obtains pre-recorded all notification methods, e.g., email, phone, and instant messaging software, etc., of the computer room where the server that is down is located. Then, the management server can determine a preset highest priority notification method among the all notification methods. After that, according to the highest priority notification method, the management server can send a restart message recorded with the location information of the server that is down to the technician in the computer room where the server that is down is located. Therefore, according to the location information of the server that is down, the technician of the computer room can find the server that is down and restart the server that is down. In addition, after sending the restart message according to the highest priority notification method, if it is monitored that the server that is down has not been successfully restarted within a preset period, according to a notification method with a substantially low priority, the management server will send the restart message again until it is monitored that the server that is down is successful restarted.

In the process of implementing the present disclosure, the inventors found that the prior art has at least following problems.

The above-mentioned preset highest priority notification method may have poor notification effects, and, thus, the technician of the computer room cannot catch the restart message in time, and the restart message desires to be repeatedly sent through any other notification method. Thus, not only substantially large system resources are consumed, but also the server that is down cannot be restarted in time, causing the service quality of the above-mentioned automatic notification system to be substantially poor.

BRIEF SUMMARY OF THE DISCLOSURE

To solve the issues of the prior art, the disclosed embodiments of the present disclosure provide a method and device for notifying downtime. The technical solutions include the following.

One aspect of the present disclosure includes a method for notifying downtime. The method includes:

> when monitoring a target server is down, determining a target computer room where the target server is located;
>
> according to statistical parameters of all previous notifications of the target computer room, adjusting a priority among a plurality of notification methods corresponding to the target computer room, where the statistical parameters at least include notification time and a restart success rate; and
>
> according to a highest priority notification method, sending a restart message for restarting the target server to the target computer room.

Further, according to the statistical parameters of all previous notifications of the target computer room, adjusting the priority among the plurality of notification methods corresponding to the target computer room includes:

> according to respective preset weight ratios of the notification time and the restart success rate, calculating a weight value of each notification method of the plurality of notification methods corresponding to the target computer room; and
>
> according to the weight value of each notification method, adjusting the priority among the plurality of notification methods.

Further, according to the weight value of each notification method, adjusting the priority among the plurality of notification methods includes:

> when the weight value of each notification method is different, adjusting a notification method corresponding to a smallest weight value to the highest priority notification method; or
>
> when weight values of at least two notification methods are same and are smallest, adjusting a notification method corresponding to a highest restart success rate among the at least two notification methods to the highest priority notification method; or
>
> when weight values of at least two notification methods are same and are smallest, and restart success rates thereof are same, adjusting a notification method corresponding to shortest notification time among the at least two notification methods to the highest priority notification method.

Further, after determining the target computer room where the target server is located when monitoring the target server is down, the method includes:

determining whether the target server is a first server that is down in the target computer room; and

if yes, obtaining a default notification method of the target computer room, and sending the restart message for restarting the target server to the target computer room according to the default notification method; or

if not, according to the statistical parameters of all previous notifications of the target computer room, adjusting the priority among the plurality of notification methods corresponding to the target computer room.

Further, after determining the target computer room where the target server is located when monitoring the target server is down, the method includes:
if a number of times that the target server is down in a preset period exceeds a preset number of times, marking the target server a faulty server, generating a feedback message recorded with location information of the faulty server, and sending the feedback message to the target computer room.
Further, after monitoring the target server is down, the method includes:

if a quantity of servers that are down exceeds a preset value, calculating a proportion of each preset device attribute of all servers that are down, and determining whether there is a target device attribute having a proportion greater than a rated proportion; and

if yes, generating a feedback message recorded with the target device attribute and the proportion thereof, and sending the feedback message to a management personnel.

Further, the method includes:

in every preset period, obtaining a downtime change value of servers that are down in a current preset period, and determining whether the downtime change value is greater than a preset change value, where the downtime change value includes a value of servers that are down and a value of servers that are successfully restarted in the current preset period; and

if yes, calculating a proportion of each preset device attribute of all servers that are down in the current preset period, generating a feedback message recorded with the above-mentioned current preset period, the above-mentioned each preset device attribute, and the above-mentioned proportion of each preset device attribute, and sending the feedback message to a management personnel; or

if not, obtaining a proportion of each preset device attribute of all servers that are down in a previous preset period, generating the feedback message recorded with the above-mentioned current preset period, the above-mentioned each preset device attribute, and the above-mentioned proportion of each preset device attribute, and sending the feedback message to the management personnel.

Another aspect of the present disclosure includes a device for notifying downtime, the device includes:

a data recording module, configured to when monitoring a target server is down, determine a target computer room where the target server is located;

a data processing module, configured to according to statistical parameters of all previous notifications of the target computer room, adjust a priority among a plurality of notification methods corresponding to the target computer room; and

an automatic notification module, configured to according to a highest priority notification method, send a restart message for restarting the target server to the target computer room.

Further, the data processing module is configured to:

according to respective preset weight ratios of notification time and a restart success rate, calculate a weight value of each notification method of the plurality of notification methods corresponding to the target computer room; and

according to the weight value of each notification method, adjust the priority among the plurality of notification methods.

Further, the data processing module is configured to:

when the weight value of each notification method is different, adjust a notification method corresponding to a smallest weight value to the highest priority notification method; or

when weight values of at least two notification methods are same and are smallest, adjust a notification method corresponding to a highest restart success rate among the at least two notification methods to the highest priority notification method; or

when weight values of at least two notification methods are same and are smallest, and restart success rates thereof are same, adjust a notification method corresponding to shortest notification time among the at least two notification methods to the highest priority notification method.

Further, the data processing module is configured to:

determine whether the target server is a first server that is down in the target computer room,

if yes, obtain a default notification method of the target computer room; and

the automatic notification module is further configured to:
according to the default notification method, send the restart message for restarting the target server to the target computer room.

Further, the data processing module is configured to:

if a number of times that the target server is down in a preset period exceeds a preset number of times, mark the target server a faulty server, and generate a feedback message recorded with location information of the faulty server; and
the automatic notification module is further configured to: send the feedback message to the target computer room.

Further, the data processing module is configured to:

if a quantity of servers that are down exceeds a preset value, calculate a proportion of each preset device attribute of all servers that are down, and determine whether there is a target device attribute having a proportion greater than a rated proportion; and

if yes, generate a feedback message recorded with the target device attribute and the proportion thereof, and send the feedback message to a management personnel.

Further, the data recording module is configured to:

in every preset period, obtain a downtime change value of servers that are down in a current preset period; and

the data processing module is further configured to:

determine whether the downtime change value is greater than a preset change value, where the downtime change value includes a value of servers that are down and a value of servers that are successfully restarted in the current preset period, and

if yes, calculate a proportion of each preset device attribute of all servers that are down in the current preset period, and generate a feedback message recorded with the above-mentioned current preset period, the above-mentioned each preset device attribute, and the above-mentioned proportion of each preset device attribute, and send the feedback message to a management personnel, or

if not, obtain a proportion of each preset device attribute of all servers that are down in a previous preset period, and generate the feedback message recorded with the above-mentioned current preset period, the above-mentioned each preset device attribute, and the above-mentioned proportion of each preset device attribute, and send the feedback message to a management personnel.

Another aspect of the present disclosure includes a management server. The management server includes a processor and a memory. The memory stores at least one instruction, at least one program, a set of codes or a set of instructions, and the at least one instruction, the at least one program, the set of codes or the set of instructions is loaded and executed by the processor to implement the method for notifying downtime described in the above aspect.
Another aspect of the present disclosure includes a computer-readable storage medium. The storage medium stores at least one instruction, at least one program, a set of codes or a set of instructions, and the at least one instruction, the at least one program, the set of codes or the set of instructions is loaded and executed by a processor to implement the method for notifying downtime described in the above aspect.
In the disclosed embodiments of the present disclosure, when monitoring the target server is down, the target computer room where the target server is located may be determined. According to the statistical parameters of all previous notifications of the target computer room, the priority among a plurality of notification methods corresponding to the target computer room may be adjusted. Further, the statistical parameters may at least include the notification time and the restart success rate. According to the highest priority notification method, the restart message for restarting the target server may be sent to the target computer room. In view of this, according to the statistical parameters of all previous notifications of the computer room where the server is located, the priority among the plurality of notification methods corresponding to the computer room may be flexibly adjusted, and then the restart message for restarting the server may be sent to the computer room according to the adjusted highest priority notification method. Further, the restart message for restarting the server that is down may be sent to the computer room through a notification method that is most suitable for the current situation, e.g., a corresponding notification method with a substantially short notification time and a substantially high restart success rate, every time. Therefore, the server may be successfully restarted by notifying once to a substantially large extent, and the restart message may not desire to be repeatedly sent through any other notification method, which may not only save system resources, but also enable the server that is down to be restarted in a timely manner, and may effectively improve the service quality of the automatic notification system. In addition, the device attitude, downtime and frequency of each server that is down in all computer rooms may be notified to the management personnel, which may facilitate management personnel to analyze the downtime reasons and downtime trends of servers. Thus, the management personnel may specifically perform maintenance and corresponding shelf restrictions on the servers, which may basically reduce the downtime frequency of the server, and may improve the service quality of each server.

BRIEF DESCRIPTION OF THE DRAWINGS

To more clearly illustrate the technical solutions in the disclosed embodiments of the present disclosure, drawings to be used in the description of the embodiments will be briefly described below. It is obvious that the drawings in the following description are certain embodiments of the present disclosure, and other drawings may be obtained by a person of ordinary skill in the art in view of the drawings provided without creative efforts.

Figure 1 illustrates a flowchart of a method for notifying downtime consistent with an embodiment of the present disclosure;

Figure 2 illustrates a schematic diagram of a device for notifying downtime consistent with an embodiment of the present disclosure;

Figure 3 illustrates a schematic diagram of a device for notifying downtime consistent with an embodiment of the present disclosure; and

Figure 4 illustrates a schematic diagram of a management server consistent with an embodiment of the present disclosure.

DETAILED DESCRIPTION

For clearer understanding of the aims, technical solutions and effects of the present disclosure, specific embodiments of the present disclosure are now described in detail with reference to the accompanying drawings.

The disclosed embodiments of the present disclosure provide a method for notifying downtime. An execution subject of the method may be a management server of any manufacturer. The management server may be any one server, or a server cluster composed of multiple servers. The management server may monitor the operating status of the server in the computer room, and after monitoring a certain server in a certain computer room is down, may send a restart message to the certain computer room to restart the server that is down through a highest priority notification method of the computer room. The above-mentioned management server may include a processor, a memory, and a transceiver. The processor may be configured to perform the processing of the method for notifying downtime in the following processes. The memory may be configured to store the data required and data generated in the following processes. The transceiver may be configured to receive and send related data in the following processes. It can be understood that the monitoring function of the management server may be achieved by any other server. The disclosed embodiments may be described using a management server with a monitoring function, and any other situation may be similar, which may not be described one by one.

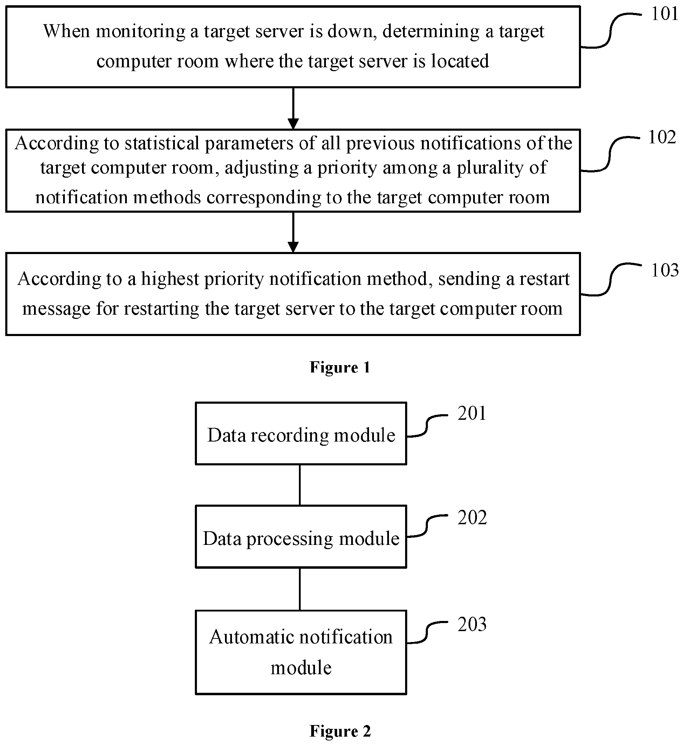

A processing flow of a method for notifying downtime illustrated in Figure 1 may be described in detail below in combination with specific embodiments, and may include the following.

Step 101: When monitoring a target server is down, determining a target computer room where the target server is located.

In one embodiment, the management personnel of the manufacturer may count the location information of each server in each computer room and notification methods of each computer room in advance. The location information may include a computer room number, a cabinet number, an IP address, etc., and the notification method may be email, telephone, and instant messaging software, etc. After that, the management personnel of the manufacturer may store the above-mentioned statistical information in a special storage device or the above-mentioned management server, and may update or modify the above-mentioned information. In view of this, when monitoring a server (referred to as the target server) is down, based on the above-mentioned location information of the server in each computer room stored in the storage device or obtained locally, the management server may determine the computer room (referred to as the target computer room) where the target server is located.

Step 102: According to statistical parameters of all previous notifications of the target computer room, adjusting the priority among the plurality of notification methods corresponding to the target computer room.

In one embodiment, the management server may count the statistical parameters of all previous notifications of the target computer room in advance. The statistical parameters may at least include notification time and a restart success rate. The notification time may be average time of previous time between sending the restart message and successfully restarting the target server through a certain notification method. The restart success rate may be a ratio of a number of notification times of sending the restart message through a certain notification method to successfully restart a corresponding server that is down over a total number of notification times through such notification method. In view of this, after determining the target computer room where the target server is located, according to the statistical parameters of all previous notifications of the target computer room, the management server may adjust the priority among the plurality of notification methods corresponding to the target computer room in real time to obtain the current priority among the plurality of notification methods.

Optionally, the processing of the above step 102 may include following: according to respective preset weight ratios of the notification time and the restart success rate, calculating a weight value of each notification method corresponding to the target computer room; and according to the weight value of each notification method, adjusting priority among the plurality of notification methods.

In one embodiment, the preset weight ratios of the notification time and the restart success rate may be set, for example, the preset weight ratio of the notification time may be approximately 40%, and the preset weight ratio of the restart success rate may be approximately 60%. In view of this, according to the respective preset weight ratios of the notification time and the restart success rate, the management server may calculate the weight value of each notification method corresponding to the target computer room, and then may adjust the priority among the plurality of notification methods according to the weight value of each notification method. Specifically, the calculation formula of the notification time of each notification method corresponding to the target computer room may be:

$$T_1 = \begin{cases} t_1, a = 1 \\ (t_1 + t_2 + \cdots + t_a)/a, a \geq 2 \end{cases}$$

where $T_1$ represents the notification time of the notification method 1; a represents after sending the restart message according to the notification method 1, the number of times that the target server successfully restarts; and $t_a$ represents for the $a^{th}$ time, the time between sending the restart message and successfully restarting the target server through the notification method 1.

The calculation formula of the restart success rate of each notification method corresponding to the target computer room may be:

$$X_1 = \frac{a}{n_1} \times 100\%,$$

where $X_1$ represents the restart success rate of notification method 1; and $n_1$ represents the number of times of sending the restart message through the notification method 1.

According to the above-mentioned notification time and restart success rate of each notification method corresponding to the target computer room, the weight value of each notification method may be calculated. A calculation formula of the weight value may be:

$$Y_1 = T_1 \times 40\% + (1 - X_1) \times 60\%,$$

where $Y_1$ represents the weight value of the notification method 1.

In view of this, after calculating the weight value of each notification method corresponding to the target computer room, the management server may adjust the priority among the plurality of notification methods according to the size of each weight value.

Optionally, the above-mentioned process of adjusting the priority among the plurality of notification methods according to the weight value of each notification method may include the following. When the weight value of each notification method is different, the notification method corresponding to a smallest weight value may be adjusted to the highest priority notification method. Alternatively, when the weight values of at least two notification methods are the same and are the smallest, the notification method corresponding to the highest restart success rate among the at least two notification methods may be adjusted to the highest priority notification method.

In one embodiment, after obtaining the weight value of each notification method corresponding to the target computer room, according to the weight value of each notification method and the values of different statistical parameters, the management server may adjust the priority among the plurality of notification methods corresponding to the target computer room. For illustrative purposes, there may be three notification methods corresponding to the target computer room. The notification time, restart success rates, and weight values corresponding to the three notification methods may be T1, X1, Y1, T2, X2, Y2, T3, X3, and Y3, respectively. Assuming Y1 <Y2 <Y3, the management server may adjust the notification method corresponding to Y1 to the highest priority notification method. Assuming Y1 = Y2 <Y3, the management server may compare the sizes of X1 and X2. Assuming XI> X2, the management server may adjust the notification method corresponding to X1 to the highest priority notification method.

Step 103: According to the highest priority notification method, sending the restart message for restarting the target server to the target computer room.

In one embodiment, after adjusting the priority among the plurality of notification methods corresponding to the target computer room, according to the highest priority notification method adjusted in real time, the management server may notify the restart message carrying the location information of the target server to the target computer room through an external communication device of the target computer room, e.g., a telephone, a computer, a smart phone, etc., used by the technician in the computer room. After that, according to the location information of the target server, the technician in the computer room may find the target server and restart the target server. In view of this, the management server may send the restart message for restarting the target server through a notification method that is most suitable for the current situation, i.e., the highest priority notification method adjusted based on the statistical parameters of all previous notifications of the target computer room, every time. Therefore, the target server may be successfully restarted by notifying once to a substantially large extent, and the restart message may not desire to be repeatedly sent through any other notification method, which may not only save system resources, but also enable the server that is down to be restarted in a timely manner, and may effectively improve the service quality of the automatic notification system.

Optionally, after performing the above step 103, the method may further include following process: acquiring and displaying the location information of the target server and the restart progress of the target server.

In one embodiment, after sending the restart message to the computer room, the management server may display the restart progress of the target server. For illustrative purposes, the target server's IP address may be 1.1.1.1. Assuming that the management server has sent the restart message to the target computer room where the target server is located, but currently has not received a receipt message, the restart progress displayed by the management server may include " IP of the server that is down: 1.1.1.1, current progress: restart message has been sent, pending receipt message".

Optionally, when monitoring the target server is down, after determining the target computer room where the target server is located, the following processes may be further performed: determining whether the target server is a first server that is down in the target computer room; if yes, obtaining a default notification method of the target computer room, and sending the restart message for restarting the target server to the target computer room according to the default notification method; if not, according to the statistical parameters of all previous notifications of the target computer room, adjusting the priority among the plurality of notification methods corresponding to the target computer room.

In one embodiment, according to the setting requirements of the management personnel, the management server may mark a certain notification method among the plurality of notification methods as a default notification method in advance, and may mark any other notification method among the plurality of notification methods as a candidate notification method. In view of this, when monitoring the target server is down, the management server may determine whether the target server is the first server that is down in the target computer room. If the target server is the first server that is down in the target computer room, according to the default notification method of the target computer room, the management server may send the restart message for restarting the target server to the target computer room. If the target server is not the first server that is down in the target computer room, according to the statistical parameters of all previous notifications of the target computer room, the management server may adjust the priority among the plurality of notification methods corresponding to the target computer room.

Optionally, when monitoring the target server is down, after determining the target computer room where the target server is located, the following processes may be further performed: if the number of times that the target server is down in a preset period exceeds a preset number of times, marking the target server a faulty server, generating a feedback message recorded with the location information of the faulty server, and sending the feedback message to the target computer room.

In one embodiment, a server that is frequently down may be marked as fault, to remind the technician in the computer room where the server is located to focus on troubleshooting the marked server, and analyze the reasons of the downtime. Specifically, the management server may set a maximum frequency (referred to as the preset number of times) that the server is allowed to be down within a preset period, for example, a maximum of 3 times or 5 times of downtime within 15 days may be set. In view of this, when monitoring the target server is down, the management server may obtain the previous downtime information of the target server, and may determine whether the number of times that the target server is down within a preset period exceeds the preset number of times. If the number of times that the target server is down within the preset period exceeds the preset number of times, the management server may mark the target server a faulty server, may generate a feedback message recorded with the location information of the faulty server, and then may send the feedback message to the target computer room. For example, the management server may notify the corresponding technician to focus on troubleshooting the target server through email or instant messaging software.

Optionally, after monitoring the target server is down, the following processes may be performed: if a quantity of servers that are down exceeds a preset value, calculating a proportion of each preset device attribute among all servers that are down, and determining whether there is a target device attribute having a proportion greater than a rated proportion; if yes, generating a feedback message recorded with the target device attribute and proportion thereof, and sending the feedback message to the management personnel.

In one embodiment, considering that the large-scale downtime of servers may affect the quality of network services provided by the manufacturer, the management server may set a total quantity (referred to as the preset value) of servers that are allowed to be down at the same time, and a highest proportion (referred to as the rated proportion) of each device attribute of the server that is down. When the management server monitors that the quantity of servers that are down exceeds the preset value at a certain time, the management server may obtain the device attribute of each server that is down (referred to as the preset device attribute). The preset device attribute may include hardware attribute, and software attribute, etc., of each server. For illustrative purposes, the preset value may be 90, and the quantity of servers that are currently down may be 100. Assuming that the quantity of servers corresponding to each preset device attribute may include 15 for CPU model 1, 20 for CPU model 2, 50 for software 1, and 15 for software 2, respectively. In view of this, the management server may calculate the proportion of the above-mentioned each preset device attribute in order to be 15%, 20%, 50%, and 15%, respectively. Assuming that the rated proportion of the above-mentioned each preset device attribute is 30%, 25%, 40%, and 20%, respectively, the management server may determine that the preset device attribute (referred to as target device attribute) corresponding to a proportion greater than the rated proportion is software 1. After that, the management server may generate a notification message including the above-mentioned target device attribute and corresponding proportion thereof, e.g., "Hello, at XX year XX month XX day XX hour XX minute, the quantity of servers that are down is 100, where software 1 has a proportion of 50% that exceeds the rated proportion, please handle it in time, thank you! ". Further, the management server may send the above notification message to the management personnel of the manufacturer by email, instant messaging software, etc. In view of this, the management personnel of the manufacturer may find the corresponding software 1 based on the content of the feedback message, and may perform corresponding treatment. It should be noted that the rated proportion of the above-mentioned preset device attribute may be set and adjusted according to specific downtime conditions, which is not limited by the present disclosure.

Optionally, the above-mentioned detailed processes of calculating the proportion of each preset device attribute among all servers that are down and determining whether there is the target device attribute having a proportion greater than the rated proportion may include following: calculating the proportion of each preset device attribute in order, and determining whether there is a proportion greater than a corresponding rated proportion of the preset device attribute; if yes, determining the preset device attribute as the target device attribute; otherwise, calculating the proportion of following preset device attribute.

In one embodiment, the management server may calculate the proportion of each preset device attribute in order, and may determine whether the preset device attribute is the target device attribute. Specifically, for illustrative purposes, the above device attributes may include CPU model 1, CPU model 2, software 1, and software 2. The management server may first calculate a proportion of CPU model 1, and determine whether the proportion is greater than a rated proportion. If the proportion is greater than the rated proportion corresponding to the preset device attribute, the management server may determine the preset device attribute corresponding to the proportion as the target device attribute, and may store the target device attribute and proportion thereof. If the proportion is less than the rated proportion corresponding to the preset device attribute, the management server may determine that the preset device attribute is not the target device attribute, and may skip the current preset device attribute to calculate the proportion of a following preset device attribute of CPU model 2. The above processes may be repeated until determining whether the above-mentioned each preset device attribute is the target device attribute.

Optionally, the present disclosure also provides a notification method. The specific processes may include following: in every preset period, obtaining a downtime change value of servers that are down in a current preset period, and determining whether the downtime change value is greater than a preset change value, where the downtime change value may include a value of servers that are down and a value of servers that are successfully restarted in the current preset period; if yes, calculating the proportion of each preset device attribute of the servers that are down in the current preset period, generating a feedback message recorded with the current preset period, each preset device attribute, and the proportion of each preset device attribute, and sending the feedback message to the management personnel; and if not, obtaining the proportion of each preset device attribute of all servers that are down in a previous preset period, generating a feedback message recorded with the current preset period, each preset device attribute, and the proportion of each preset device attribute, and sending the feedback message to the management personnel.

In one embodiment, to avoid large-scale downtime of servers, in every preset period, the management server may obtain a sum (referred to as the downtime change value) of a quantity of newly added servers that are down and a quantity of newly added servers that are successfully restarted in the current preset period, and may set an upper limit (referred to as the preset change value) for the downtime change value. For illustrative purposes, the preset period may be 24 hours, and the preset change value may be 50. Considering that there are fewer users using network services every early morning, the management server may be set to obtain the downtime change value within the past 24 hours at 24:00 every early morning. Assuming that the quantity of newly added servers that are down is 30, and the quantity of newly added servers that are successfully restarted is 40, the management server may calculate the downtime change value in the past 24 hours to be 70, which is greater than the preset change value of 50. Then, the management server may calculate the proportion of each preset device attribute of the servers that are down in the past 24 hours, determine the target device attribute, generate a feedback message including the above-mentioned preset period, each preset device attribute, and the proportion corresponding to each preset device attribute, and sending the feedback message to the management personnel of the manufacturer.

It is worth to note that the management server may obtain the downtime change value in the past 24 hours in every fixed period, e.g., every 3 hours or 4 hours. Specifically, the management server may calculate the proportion of each preset device attribute of servers that are down in each period, may determine the target device attribute, may generate a feedback message including the above-mentioned preset period, each preset device attribute, and the proportion corresponding to each preset device attribute, and may send the feedback message to the management personnel of the manufacturer through email or instant messaging software, etc. The content of the feedback message may be in a form of text, or graphics. After that, the management personnel may find the corresponding server according to the content of the feedback message, and may perform maintenance and shelf restrictions to ensure the quality of network services provided by the manufacturer. In view of this, the downtime frequency of the servers may be basically reduced, and the service quality of each server may be improved.

The technical solutions in the disclosed embodiments of the present disclosure may have the following beneficial effects.

In the disclosed embodiments of the present disclosure, when monitoring the target server is down, the target computer room where the target server is located may be determined. According to the statistical parameters of all previous notifications of the target computer room, the priority among the plurality of notification methods corresponding to the target computer room may be adjusted. Further, the statistical parameters may at least include the notification time and the restart success rate. According to the highest priority notification method, the restart message for restarting the target server may be sent to the target computer room. In view of this, according to the statistical parameters of all previous notifications of the computer room where the server is located, the priority among the plurality of notification methods corresponding to the computer room may be flexibly adjusted, and then the restart message for the server may be sent to the computer room according to the adjusted highest priority notification method. Further, the restart message for the server that is down may be sent to the computer room through a notification method that is most suitable for the current situation, e.g., a corresponding notification method with a substantially short notification time and a substantially high restart success rate, every time. Therefore, the server may be successfully restarted by notifying once to a substantially large extent, and the restart message may not desire to be repeatedly sent through any other notification method, which may not only save system resources, but also enable the server that is down to be restarted in a timely manner, and may effectively improve the service quality of the automatic notification system. In addition, the device attitude, downtime and frequency of each server that is down in all computer rooms may be notified to the management personnel, which may facilitate management personnel to analyze the downtime reasons and downtime trends of servers. Thus, the management personnel may specifically perform maintenance and corresponding shelf restrictions on the servers, which may basically reduce the downtime frequency of the server, and may improve the service quality of each server.

Based on a same technical concept, the disclosed embodiments of the present disclosure may further provide a device for notifying downtime. Referring to Figure 2, the device may include:

a data recording module 201, configured to when monitoring a target server is down, determine a target computer room where the target server is located;

a data processing module 202, configured to according to statistical parameters of all previous notifications of the target computer room, adjust priority among a plurality of notification methods corresponding to the target computer room; and

an automatic notification module 203, configured to according to a highest priority notification method, send a restart message for restarting the target server to the target computer room.

Further, the data processing module 202 may be specifically configured to:

according to respective preset weight ratios of notification time and a restart success rate, calculate a weight value of each notification method corresponding to the target computer room; and

according to the weight value of each notification method, adjust priority among the plurality of notification methods.

Further, the data processing module 202 may be specifically configured to:

when the weight values of all notification methods are different, adjust a notification method corresponding to a smallest weight value to a highest priority notification method; or

when the weight values of at least two notification methods are the same and are the smallest, adjust a notification method corresponding to a highest restart success rate among the at least two notification methods to the highest priority notification method; or

when the weight values of at least two notification methods are the same and are the smallest, and the restart success rates thereof are the same, adjust a notification method corresponding to shortest notification time among the at least two notification methods to the highest priority notification method.

Further, the data processing module 202 may be configured to:

determine whether the target server is a first server that is down in the target computer room; and

if yes, obtain a default notification method of the target computer room.

The automatic notification module 203 may be further configured to:
send the restart message for restarting the target server to the target computer room according to the default notification method.

Further, the data processing module 202 may be configured to:
if the number of times that the target server is down in a preset period exceeds a preset number of times, mark the target server a faulty server, and generate a feedback message recorded with location information of the faulty server.

The automatic notification module 203 may be further configured to:
send the feedback message to the target computer room.

Further, the data processing module 202 may be configured to:

if a quantity of servers that are down exceeds a preset value, calculate a proportion of each preset device attribute among all servers that are down, and determine whether there is a target device attribute having a proportion greater than a rated proportion; and

if yes, generate a feedback message recorded with the target device attribute and proportion thereof, and send the feedback message to the management personnel.

Further, the data recording module 201 may be configured to:
in every preset period, obtain a downtime change value of servers that are down in a current preset period.
The data processing module 202 may be further configured to:

determine whether the downtime change value is greater than a preset change value, where the downtime change value may include a value of servers that are down and a value of servers that are successfully restarted in the current preset period; and

if yes, calculate the proportion of each preset device attribute of all servers that are down in the current preset period, generate a feedback message recorded with the above-mentioned current preset period, the above-mentioned each preset device attribute, and the proportion of the above-mentioned each preset device attribute, and send the feedback message to the management personnel; or

if not, obtain the proportion of each preset device attribute of all servers that are down in a previous preset period, generate a feedback message recorded with the above-mentioned current preset period, the above-mentioned each preset device attribute, and the proportion of the above-mentioned each preset device attribute, and send the feedback message to the management personnel.

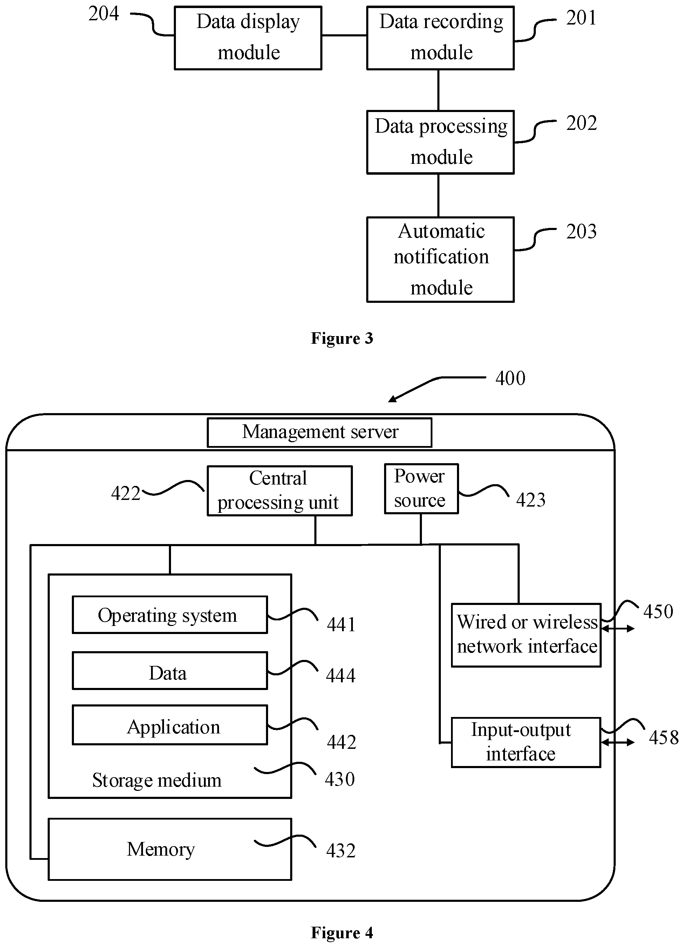

Further, referring to Figure 3, the device may further include a data display module 204, configured to:
obtain and display the location information of the target server and restart progress of the target server.
Figure 4 illustrates a schematic diagram of a management server consistent with an embodiment of the present disclosure. The management server 400 may be significantly different due to different configurations or performance, and may include one or more central processing units 422 (e.g., one or more processors), a memory 432, and one or more storage media 430 (e.g., one or one mass storage devices) for storing an application 442 and data 444. Further, the memory 432 and a storage medium 430 may be temporary storage or persistent storage. The program stored in the storage medium 430 may include one or more modules (not illustrated in the Figure), and each module may include a series of instruction operations in a scheduling device.

Furthermore, the central processing unit 422 may be configured to communicate with the storage medium 430, and may execute a series of instruction operations in the storage medium 430 on the management server 400.

The management server 400 may further include one or more power sources 423, one or more wired or wireless network interfaces 450, one or more input-output interfaces 458, and/or, one or more operating systems 441, e.g., Windows Server TM, Mac OS XTM, Unix TM, Linux TM, FreeBSD TM, etc.

The management server 400 may include a memory, and one or more programs. Further, the one or more programs may be stored in the memory. The management server may be configured to execute the one or more programs including the above instructions for notifying downtime by the one or more processors.

A person skilled in the art can understand that all or part of the procedures implementing the above embodiments may be completed through a hardware, or may be completed by instructing a related hardware through a program. The program may be stored in a computer-readable storage medium. The storage medium mentioned above may be a read-only memory, a magnetic disk, or an optical disk, etc.

The above descriptions are merely the preferred embodiments of the present disclosure, and are not intended to limit the present disclosure. Any modifications, equivalents, improvements, etc., which are within the spirit and scope of the present disclosure, should be included in the protection of the present disclosure.

**Claims**

1. A method for notifying downtime, wherein the method comprises:

   when monitoring a target server is down, determining a target computer room where the target server is located;
   according to statistical parameters of all previous notifications of the target computer room, adjusting a priority among a plurality of notification methods corresponding to the target computer room, wherein the statistical parameters at least include notification time and a restart success rate; and
   according to a highest priority notification method, sending a restart message for restarting the target server to the target computer room.

2. The method according to claim 1, wherein according to the statistical parameters of all previous notifications of the target computer room, adjusting the priority among the plurality of notification methods corresponding to the target computer room includes:

   according to respective preset weight ratios of the notification time and the restart success rate, calculating a weight value of each notification method of the plurality of notification methods corresponding to the target computer room; and
according to the weight value of each notification method, adjusting the priority among the plurality of notification methods.

3. The method according to claim 2, wherein according to the weight value of each notification method, adjusting the priority among the plurality of notification methods includes:

   when the weight value of each notification method is different, adjusting a notification method corresponding to a smallest weight value to the highest priority notification method; or
   when weight values of at least two notification methods are same and are smallest, adjusting a notification method corresponding to a highest restart success rate among the at least two notification methods to the highest priority notification method; or
   when weight values of at least two notification methods are same and are smallest, and restart success rates thereof are same, adjusting a notification method corresponding to shortest notification time among the at least two notification methods to the highest priority notification method.

4. The method according to claim 1, after determining the target computer room where the target server is located when monitoring the target server is down, further including:

   determining whether the target server is a first server that is down in the target computer room; and
   if yes, obtaining a default notification method of the target computer room, and sending the restart message for restarting the target server to the target computer room according to the default notification method; or
   if not, according to the statistical parameters of all previous notifications of the target computer room, adjusting the priority among the plurality of notification methods corresponding to the target computer room.

5. The method according to claim 1, after determining the target computer room where the target server is located when monitoring the target server is down, further including:
   if a number of times that the target server is down in a preset period exceeds a preset number of times, marking the target server a faulty server, generating a feedback message recorded with location information of the faulty server, and sending the feedback message to the target computer room.

6. The method according to claim 1, after monitoring the target server is down, further including:

if a quantity of servers that are down exceeds a preset value, calculating a proportion of each preset device attribute of all servers that are down, and determining whether there is a target device attribute having a proportion greater than a rated proportion; and
if yes, generating a feedback message recorded with the target device attribute and the proportion thereof, and sending the feedback message to a management personnel.

7. The method according to claim 1, further including:

in every preset period, obtaining a downtime change value of servers that are down in a current preset period, and determining whether the downtime change value is greater than a preset change value, wherein the downtime change value includes a value of servers that are down and a value of servers that are successfully restarted in the current preset period; and
if yes, calculating a proportion of each preset device attribute of all servers that are down in the current preset period, generating a feedback message recorded with the above-mentioned current preset period, the above-mentioned each preset device attribute, and the above-mentioned proportion of each preset device attribute, and sending the feedback message to a management personnel; or
if not, obtaining a proportion of each preset device attribute of all servers that are down in a previous preset period, generating the feedback message recorded with the above-mentioned current preset period, the above-mentioned each preset device attribute, and the above-mentioned proportion of each preset device attribute, and sending the feedback message to the management personnel.

8. A device for notifying downtime, wherein the device comprises:

a data recording module, configured to when monitoring a target server is down, determine a target computer room where the target server is located;
a data processing module, configured to according to statistical parameters of all previous notifications of the target computer room, adjust a priority among a plurality of notification methods corresponding to the target computer room; and

an automatic notification module, configured to according to a highest priority notification method, send a restart message for restarting the target server to the target computer room.

9. The device according to claim 8, wherein the data processing module is further configured to:

according to respective preset weight ratios of notification time and a restart success rate, calculate a weight value of each notification method of the plurality of notification methods corresponding to the target computer room; and
according to the weight value of each notification method, adjust the priority among the plurality of notification methods.

10. The device according to claim 9, wherein the data processing module is further configured to:

when the weight value of each notification method is different, adjust a notification method corresponding to a smallest weight value to the highest priority notification method; or
when weight values of at least two notification methods are same and are smallest, adjust a notification method corresponding to a highest restart success rate among the at least two notification methods to the highest priority notification method; or
when weight values of at least two notification methods are same and are smallest, and restart success rates thereof are same, adjust a notification method corresponding to shortest notification time among the at least two notification methods to the highest priority notification method.

11. The device according to claim 8, wherein the data processing module is further configured to:

determine whether the target server is a first server that is down in the target computer room; and
if yes, obtain a default notification method of the target computer room, wherein:
the automatic notification module is further configured to:
according to the default notification method, send the restart message for restarting the target server to the target computer room.

12. The device according to claim 8, wherein the data processing module is further configured to:
if a number of times that the target server is down in a preset period exceeds a preset number of times, mark the target server a faulty server, and generate a feedback message recorded with location information of the faulty server, wherein:
the automatic notification module is further configured to:
send the feedback message to the target computer room.

13. The device according to claim 8, wherein the data processing module is further configured to:

if a quantity of servers that are down exceeds a preset value, calculate a proportion of each preset device attribute of all servers that are down, and determine whether there is a target device attribute having a proportion greater than a rated proportion; and
if yes, generate a feedback message recorded with the target device attribute and the proportion thereof, and send the feedback message to a management personnel.

14. The device according to claim 8, wherein the data recording module is further configured to:
in every preset period, obtain a downtime change value of servers that are down in a current preset period, wherein:
the data processing module is further configured to:

determine whether the downtime change value is greater than a preset change value, wherein the downtime change value includes a value of servers that are down and a value of servers that are successfully restarted in the current preset period, and
if yes, calculate a proportion of each preset device attribute of all servers that are down in the current preset period, and generate a feedback message recorded with the above-mentioned current preset period, the above-mentioned each preset device attribute, and the above-mentioned proportion of each preset device attribute, and send the feedback message to a management personnel, or
if not, obtain a proportion of each preset device attribute of all servers that are down in a previous preset period, and generate the feedback message recorded with the above-mentioned current preset period, the above-mentioned each preset device attribute, and the above-mentioned proportion of each preset device attribute, and send the feedback message to a management personnel.

15. A management server, wherein the management server comprises a processor and a memory, wherein the memory stores at least one instruction, at least one program, a set of codes or a set of instructions, and the at least one instruction, the at least one program, the set of codes or the set of instructions is loaded and executed by the processor to implement the method for notifying downtime in any one of claims 1-7.

16. A computer-readable storage medium, wherein the storage medium stores at least one instruction, at least one program, a set of codes or a set of instructions, and the at least one instruction, the at least one program, the set of codes or the set of instructions is loaded and executed by a processor to implement the method for notifying downtime in any one of claims 1-7.

When monitoring a target server is down, determining a target computer room where the target server is located ⌐ 101

According to statistical parameters of all previous notifications of the target computer room, adjusting a priority among a plurality of notification methods corresponding to the target computer room ⌐ 102

According to a highest priority notification method, sending a restart message for restarting the target server to the target computer room ⌐ 103

**Figure 1**

Data recording module ⌐ 201

Data processing module ⌐ 202

Automatic notification module ⌐ 203

**Figure 2**

204 — Data display module ——— Data recording module ~ 201

Data processing module ~ 202

Automatic notification module ~ 203

Figure 3

400

Management server

422 ~ Central processing unit    Power source ~ 423

Operating system ~ 441

Data ~ 444

Application ~ 442

Storage medium ~ 430

Memory ~ 432

Wired or wireless network interface ~ 450

Input-output interface ~ 458

Figure 4

## INTERNATIONAL SEARCH REPORT

| International application No. |
| --- |
| **PCT/CN2019/071879** |

**A. CLASSIFICATION OF SUBJECT MATTER**

H04L 12/24(2006.01)i; H04L 12/12(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; DWPI; SIPOABS; CNTXT; WOTXT; EPTXTX; USTXT; CNKI; 3GPP: 故障, 告警, 宕机, 通知, 通信, 通讯, 消息, 信息, 方式, 途径, 种类, 类型, 历史, 历次, 过去, 之前, 成功率, 时间, 邮件, 短信, 电话, 即时通信, 即时通讯, 微信, 应用程序, 机房, 服务器, 优先, fault, fail+, down, notificat+, communit+, message, information, type, way, history, before, success+, rate, time, email, +phone+, IM, QQ, APP?

**C. DOCUMENTS CONSIDERED TO BE RELEVANT**

| Category* | Citation of document, with indication, where appropriate, of the relevant passages | Relevant to claim No. |
| --- | --- | --- |
| Y | CN 105094030 A (SHANGHAI COWIN COMPUTER CO., LTD.) 25 November 2015 (2015-11-25) description, pages 2-4 | 1-16 |
| Y | CN 108156329 A (VIVO MOBILE COMMUNICATION CO., LTD.) 12 June 2018 (2018-06-12) description, paragraphs [0023]-[0064] | 1-16 |
| A | CN 102111310 A (WANGSU SCIENCE AND TECHNOLOGY CO., LTD.) 29 June 2011 (2011-06-29) entire document | 1-16 |
| A | CN 104009863 A (LENOVO (BEIJING) LIMITED) 27 August 2014 (2014-08-27) entire document | 1-16 |
| A | CN 108737132 A (YOUKU INFORMATION TECHNOLOGY (BEIJING) CO., LTD.) 02 November 2018 (2018-11-02) entire document | 1-16 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 September 2019** | **09 September 2019** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**EP 3 896 904 A1**

### INTERNATIONAL SEARCH REPORT

| International application No. |
|---|
| **PCT/CN2019/071879** |

**C.    DOCUMENTS CONSIDERED TO BE RELEVANT**

| Category* | Citation of document, with indication, where appropriate, of the relevant passages | Relevant to claim No. |
|---|---|---|
| A | KR 20040056971 A (KOREA ELECTRONICS AND TELECOMMUNICATIONS RESEARCH INSTITUTE) 01 July 2004 (2004-07-01) entire document | 1-16 |

Form PCT/ISA/210 (second sheet) (January 2015)

**17**

**INTERNATIONAL SEARCH REPORT**
Information on patent family members

International application No.

**PCT/CN2019/071879**

| Patent document cited in search report | | | Publication date (day/month/year) | Patent family member(s) | | | Publication date (day/month/year) |
|---|---|---|---|---|---|---|---|
| CN | 105094030 | A | 25 November 2015 | None | | | |
| CN | 108156329 | A | 12 June 2018 | None | | | |
| CN | 102111310 | A | 29 June 2011 | CN | 102111310 | B | 27 November 2013 |
| CN | 104009863 | A | 27 August 2014 | None | | | |
| CN | 108737132 | A | 02 November 2018 | None | | | |
| KR | 20040056971 | A | 01 July 2004 | KR | 100521140 | B1 | 12 October 2005 |

Form PCT/ISA/210 (patent family annex) (January 2015)